# EUROPÄISCHE PATENTANMELDUNG

(11) **EP 1 396 801 A1**
(43) Veröffentlichungstag der Anmeldung: **10.03.2004**
(21) Anmeldenummer: 02019999.8
(22) Anmeldetag: 05.09.2002
(51) Int. Cl.: G06F 17/50

(54) **Verfahren zum Entwickeln eines elektronischen Bausteins**

(71) Anmelder: SIEMENS AKTIENGESELLSCHAFT, 80333 München (DE)
(72) Erfinder: Ghameshlu, Majid, 1110 Wien (AT); Krause, Karlheinz, 82152 Planegg (DE); Taucher, Herbert, 2340 Moedling (AT)

(57) **Zusammenfassung**

Bei Verfahren zum Entwickeln eines elektronischen Bausteins, bei denen ein Layout für einen Baustein durchgeführt sowie eine Datei mit Timing-Informationen generiert wird, vermeidet die vorliegende Erfindung überflüssige Layout-Netzlistenänderungen durch Vorsehen folgender Schritte: a) Durchführen einer anfänglichen Timing-Analyse unter Verwendung der Datei um Verletzungen von Timing-Anforderungen zu ermitteln; b) Produzieren des Bausteins gemäß dem derzeitigen Layout wenn keine Timing-Verletzung festgestellt wurde, ansonsten; c) Speichern von Informationen über ermittelte Verletzungen von Timing-Anforderungen in mindestens einer Patchliste; d) Ändern der Datei gemäß der Verletzungsinformation in der Patchliste; e) erneutes Durchführen der Timing-Analyse unter Verwendung der abgeänderten Datei; f) iteratives Wiederholen der Schritte c), d) und e), wenn eine erneute Timing-Verletzung festgestellt wurde; g) wenn keine Timing-Verletzung mehr festgestellt wird Durchführen eines Layout-Anpassungsschrittes und Generieren einer neuen Datei, die Laufzeitinformationen basierend auf dem angepaßten Layout enthält; und h) Rückkehren zum Schritt a) und Ausführen des Schrittes.

## Beschreibung

Die Erfindung bezieht sich auf elektronische Bausteine, insbesondere auf ein Verfahren zum Entwickeln bzw. zum Erstellen eines Designs eines elektronischen Bausteins, bei dem ein Layout für einen Baustein durchgeführt sowie eine Datei mit Timing-Informationen generiert wird.

Elektrische Bausteine werden häufig als Application Specific Integrated Circuits (ASICs) ausgebildet. Mit ASICs bezeichnet man eine Anordnung von logischen Gattern, sowie Speicherschaltungen und deren Verbindungen, auf einem einzelnen Siliziumwafer. ASICs sind eine Ansammlung von Schaltungen mit einfachen Funktionen, wie Flip Flops, Invertierern, NANDs und NORs sowie von komplexeren Strukturen, wie Speicheranordnungen, Addierern, Zählern und Phasenregelschleifen. Die verschiedenen Schaltungen werden in einem ASIC kombiniert, um eine bestimmte Anwendung bzw. Applikation durchzuführen. Hierbei werden ASICs in einer Vielzahl von Produkten, z.B. Konsumprodukten, wie Videospiele, digitale Kameras, in Fahrzeugen und PCs, sowie in Highend Technologieprodukten wie Workstations und Routern eingesetzt.

Die Entwicklung eines anwendungsspezifischen ICs oder ASICs erfolgt im Allgemeinen in fünf aufeinanderfolgenden Phasen: Spezifikation, Codierung, Synthese, Layout und Produktion. Für einen genauen Überblick über die einzelnen Phasen wird auf Standardwerke wie z.B. Tietze, Schenk, "Halbleiterschaltungstechnik", 9. Auflage, Springer-Verlag, Berlin, 1989 und Nigel Horspool, "The ASIC Handbook", 2001, Prentice Hall PTR, verwiesen. Im folgenden wird jedoch lediglich die Endphase eines ASIC-Designs, insbesondere die Layoutphase und mögliche Modifikation des Layouts auf Grund von Timingverifikationen beschrieben.

In dieser Endphase, die auf dem Fachgebiet als "Timing-Closure" bezeichnet wird, sind unter Einbeziehung des ASIC-Layouts, in der Regel einige Korrekturen aufgrund von Timing-Verletzungen erforderlich. Hierbei steigt die Anzahl der Modifikationen mit der Komplexität, der Betriebsfrequenz und den Deep-Submicron-Effekten. Die Änderungen, die aufgrund von Timing-Verletzungen erforderlich sind, werden aus den Timing-Berichten aus einer statischen Timing-Analyse (STA) abgeleitet. Je mehr die Technologie ausgereizt wird, d.h. an die Grenze der Betriebsfrequenz gegangen wird, desto höher wird die Anzahl der nötigen Korrekturen ausfallen. Bei einem zeitkritischen aktuellen ASIC-Design können es z.B. mehrere Tausend Korrekturen sein.

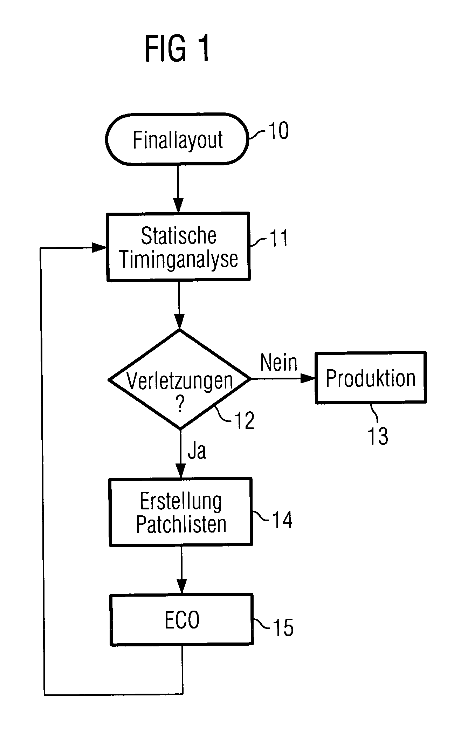

Ein Beispiel für einen herkömmlichen Ablauf der Timing-Closure ist in der Figur 1 dargestellt. Im Schritt 10 werden nach Durchlaufen der ersten drei ASIC-Designphasen die in den vorhergehenden Phasen generierten Netzlisten, d.h. Listen mit Bauelementen und deren Verbindungen, auf einer Chipfläche plaziert und verdrahtet. Hierbei müssen die vorher definierten Layout-Constraints bzw. Beschränkungen eingehalten werden. Nachfolgend wird im Schritt 11 eine Timing-Analyse, speziell eine statische Timing-Analyse durchgeführt und Timing-Berichte generiert, die dann in einem nachfolgenden Überprüfungsschritt 12 hinsichtlich Timing-Verletzungen untersucht werden. Sollten keine Timing-Verletzungen festgestellt werden, kann gemäß der im letzten Layout generierten Netzlisten mit der Produktion des ASICs begonnen werden. Wurden jedoch im Schritt 12 Timing-Verletzungen festgestellt, werden im Schritt 14 statt dessen sogenannte Patchlisten generiert, die Art und Umfang der nötigen Timing-Korrekturen, basierend auf den zuvor aufgedeckten Timing-Verletzungen, aufzeichnen. Nachfolgend wird im Schritt 15 ein Layout-Merge durchgeführt, was auch als Engineering Change Order (ECO) bezeichnet wird. Im ECO-Schritt 15 werden die in den Patchlisten aufgezeigten physikalischen Korrekturmaßnahmen aufgrund der Timing-Verletzungen im Layout realisiert. Da die Korrekturmaßnahmen jedoch unerwünschte Seiteneffekte haben können, kehrt das Verfahren zum Schritt 11 zurück, und eine erneute statische Timing-Analyse wird durchgeführt. Der Verfahrensablauf wiederholt sich nun, bis alle Timing-Verletzungen beseitigt wurden.

Es ergibt sich das Problem, daß die Wirksamkeit durchgeführter Korrekturmaßnahmen sowie deren Erfolg und unerwünschte Nebeneffekte erst nach der Realisierung im Layout, d.h. nach dem zeitaufwendigen Schritt 15, und der Durchführung einer erneuten statischen Timing-Analyse sichtbar werden.

Der vorliegenden Erfindung liegt daher das Problem zugrunde, ein Verfahren für die Entwicklung eines elektronischen Bausteins zu schaffen, bei dem eine übermäßige Netzlistenveränderung für das Layout vermieden wird, um dadurch den gesamten ASIC-Designprozess abkürzen zu können.

Diese Aufgabe wird durch ein Verfahren zur Entwicklung eines elektronischen Bausteins gemäß dem Oberbegriff gelöst, das die folgenden Schritte aufweist:
a) Durchführen einer anfänglichen Timing-Analyse unter Verwendung der Datei um Verletzungen von Timing-Anforderungen zu ermitteln;
b) Produzieren des Bausteins gemäß dem derzeitigen Layout, wenn keine Timing-Verletzung festgestellt wurde, ansonsten
c) Speichern von Informationen über ermittelte Verletzungen von Timing-Anforderungen in mindestens einer Patchliste;
d) Ändern der Datei gemäß der Verletzungsinformation in der Patchliste;
e) erneutes Durchführen der Timing-Analyse unter Verwendung der abgeänderten Datei;
f) iteratives Wiederholen der Schritte c), d) und e), wenn eine erneute Timing-Verletzung festgestellt wurde;
g) wenn keine Timing-Verletzung mehr festgestellt wird Durchführen eines Layout-Anpassungsschrittes und Generieren einer neuen Datei, die Laufzeitinformationen basierend auf dem angepaßten Layout enthält;
h) Rückkehren zum Schritt a) und Ausführen des Schrittes.

Mit dem erfindungsgemäßen Verfahren ergeben sich die folgenden Vorteile:
- keine aufwendigen Layout-Netzlistenänderungen zur Analyse;
- Vollständigkeitsprüfung möglich, (d.h. eine Überprüfung ob alle Timing-Verletzungen durch die Maßnahmen abgedeckt sind);
- Risiko-Beseitigung beim Layoutanpassungsschritt, insbesondere beim ECO;
- Kostenreduktion durch eingesparte Arbeitszeit;
- Beschleunigung des Time-To-Market.

Gemäß einem weiteren Aspekt weisen die Verletzungsinformationen eine Information über physikalische Maßnahmen auf, die im Layout implementiert werden müssen, um die Timing-Verletzungen zu vermeiden. Im Schritt d) des Änderns der Datei werden nun in dieser Datei Eingriffe vorgenommen werden, die äquivalent zu den durch die Verletzungsinformation in der Patchliste definierten physikalischen Maßnahmen und konform zu einem Dateiformat dieser Datei sind.

Dadurch werden netzlistenäquivalente Modifikationen an den erforderlichen Stellen in der Datei eingebracht, ohne auf ein neues Layout zugreifen zu müssen.

Gemäß einer besonders vorteilhaften Ausführungsform ist die Datei eine Datei im Standard Delay Format (SDF). Hierdurch setzt das Verfahren auf eine existierende Datenbasis auf, nämlich dem SDF-File, und ermöglicht eine erneute Timing-Analyse ohne ein neues Layout.

Gemäß einer weiteren besonders vorteilhaften Ausführungsform ist der Schritt a) eine statische Timing-Analyse (STA). Dadurch kann eine Vorab-Analyse durchgeführt werden, um schnell eine Bewertung der durchgeführten Modifikationen zu ermitteln.

Gemäß einer anderen vorteilhaften Ausführungsform wird bei jedem Durchlaufen des Schrittes c) eine neue Patchliste erzeugt, in der Verletzungsinformationen gespeichert werden, um ein leichtes Verwerfen bzw. Abändern von einzelnen Modifikationenschritten zu ermöglichen, wenn sich nach der Vorab-Analyse herausstellen sollte, daß eine Modifikation nicht zu zum erwünschten Erfolg geführt hat.

Gemäß einer weiteren vorteilhaften Ausführungsform wird zu Beginn des Verfahren beim ersten Durchlaufen des Schrittes c) eine Patchliste eingerichtet und bei jedem erneuten Durchlauf des Schrittes c) werden weitere gewonnene Verletzungsinformationen in der bestehenden Patchliste angehängt. Dadurch werden alle nötigen Modifikation zentral gespeichert und verwaltet.

Gemäß einer alternativen vorteilhaften Ausführungsform werden Scripte und Tools eingesetzt, die sowohl die Patchlisten automatisch generieren als auch die Änderungen der SDF-Datei automatisch durchführen. Dadurch wird der Zeit- und Kostenaufwand für das Timing-Closure erheblich reduziert, da alle Schritte rechnergestützt ausgeführt werden können.

Ein Ausführungsbeispiel der Erfindung ist in den Zeichnungen dargestellt, und wird im Folgenden näher beschrieben. Es zeigen:
- Fig. 1: ein zuvor beschriebenes herkömmliches Verfahren zur Konstruktion eines elektronischen Bausteins;
- Fig. 2: ein Flußdiagramm zur Konstruktion eines elektronischen Bausteins gemäß der vorliegenden Erfindung.

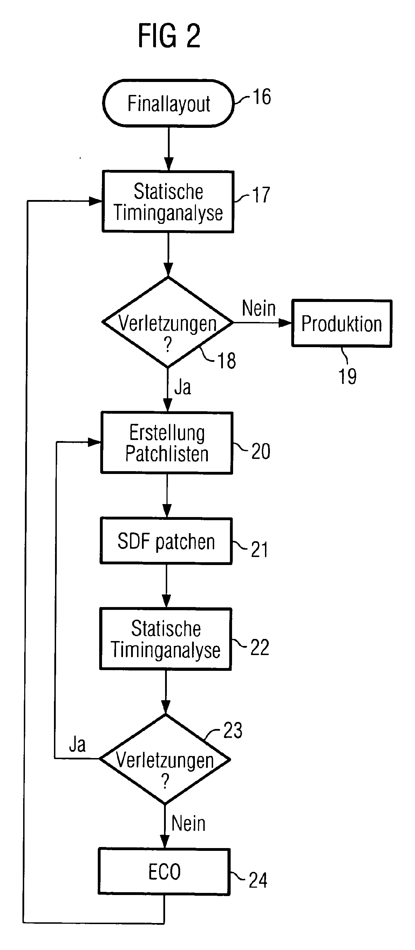

Bezugnehmend auf Fig. 2 wird nun gemäß der vorliegenden Erfindung das bevorzugte Verfahren zur Konstruktion eines elektronischen Bausteins beschrieben. Insbesondere wird ein Verfahren vorgestellt, um beim Timing-Closure eines ASICs die Gesamtprüfdauer zur Aufdeckung und Beseitigung von Timing-Verletzungen zu verringern. Das Verfahren beginnt im Schritt 16 mit der Durchführung des Final Layouts bzw. des abschlieβenden Layouts. Beim ASIC-Layout werden die Netzlisten, die aus den vorhergehenden ASIC-Designschritten (Spezifikation, Codierung und Synthese) erhalten wurden, auf der Chipfläche plaziert und geroutet. Dies wird auf dem Fachgebiet auch als Place and Route bezeichnet.

Im Rahmen des Layoutprozesses wird auch eine Datei mit Timing-Informationen generiert, um das reale Zeitverhalten der Schaltung zu kontrollieren. Im bevorzugten Ausführungsbeispiel handelt es sich bei der Datei um eine sogenanntes SDF-Datei (Standard Delay Format). Die SDF-Datei enthält unter anderem das gesamte Timing für sämtliche Pfade im ASIC. Hierbei wird das reale Zeitverhalten der Schaltung aufgrund vieler Faktoren, wie z.B. der Ausgangs-Treiberstärken der einzelnen Bauelemente, der Anzahl der jeweils angeschlossenen Eingänge anderer Bauelement und der Länge der jeweiligen Verbindung aus den geometrischen Daten des Layouts berechnet und in der SDF-Datei abgespeichert. Inhalt und Spezifizierung einer SDF-Datei sind auf dem Fachgebiet hinreichend bekannt und werden z.B. in dem Dokument "Standard Delay Format Specification", Version 3.0, Mai 1995, veröffentlicht durch Open Verilog, beschrieben.

Das erfindungsgemäße Verfahren fährt nach dem Final Layout mit einer Timing-Analyse im Schritt 17 fort. Im bevorzugten Ausführungsbeispiel ist die Timing-Analyse eine statische Timing-Analyse (STA). Basis für die Timing-Analyse ist die zuvor generierte SDF-Datei, die alle Timing-Werte und alle Pfade, die für die Durchführung der Timing-Analyse nötig sind, enthält. Die STA bringt alle Pfade, die relevant für einen komplett zu betrachtenden Pfad sind, miteinander in Verbindung. Die STA sortiert und kombiniert weiterhin die Pfade für eine Timing-Betrachtung und gibt sogenannte Timing-Berichte aus.

Im darauffolgenden Verfahrensschritt 18 werden die in der STA erzeugten Timing-Berichte auf Timing-Verletzungen untersucht. Timing-Verletzungen werden generell in sogenannte Hold- und Setup-Verletzungen unterteilt. Bei der Setup-Zeit handelt es sich um die Zeitperiode vor der Anstiegsflanke der Synchronisierungstaktung. Mit der Hold-Zeit wird die Zeitperiode nach der Anstiegsflanke der Synchronisierungstaktung bezeichnet. Wenn die Setup- und Hold-Zeitkriterien z.B. bei einem FlipFlop nicht erfüllt werden, führt dies zu einer Timing-Verletzung und die Ausgabe des Flip-Flops ist nicht sicher gewährleistet.

Sollten in dem Überprüfungsschritt 18 keine Timing-Verletzungsschritte festgestellt werden, kann die Timing-Closure-Phase des ASIC-Designs abgeschlossen werden, und die aus dem letzten Layout generierten entsprechenden Netzlisten werden für die ASIC-Produktion (Schritt 19) eingesetzt.

Wurden jedoch im Schritt 18 Timing-Verletzungen festgestellt, so wird mit Schritt 20 fortgefahren. Im Schritt 20 werden sogenannte Patchlisten erstellt, in denen die Stellen im ASIC aufgelistet sind, wo eingegriffen werden muß, um die Timing-Verletzungen zu korrigieren. Die Patchlisten enthalten im bevorzugten Ausführungsbeispiel auch Informationen über physikalische Maßnahmen, die durchgeführt werden müssen, um die Timing-Verletzungen zu beseitigen. Auf diese Maßnahmen wird weiter unten noch im Detail eingegangen.

Im nächsten Schritt 21 werden nun die in den Patchlisten aufgezeigten erforderlichen Änderungen und Korrekturen direkt in die SDF-Datei eingebracht.

Hierbei werden netzlistenäquivalente Modifikationen an den erforderlichen Stellen in die SDF-Datei eingebracht, ohne dabei die Netzliste für das Layout zu diesem Zeitpunkt zu ändern.

Die bezüglich der Korrekturen angepaßte SDF-Datei wird nun im Schritt 22 für eine erneute statische Timing-Analyse eingesetzt. Diese Vorab-STA läßt erkennen, ob die getroffenen Maßnahmen die zuvor aufgedeckten Timing-Verletzungen beseitigen, ob die Maßnahmen alle Verletzungen abdecken (Vollständigkeit) und ob die Korrekturen unerwünschte Seiteneffekte zufolge haben.

Daher werden im Schritt 23 erneut die von der STA 22 gelieferten Timing-Berichte nach Verletzungen überprüft. Stellt sich im Schritt 23 heraus, daß noch immer Timing-Verletzungen vorliegen, kehrt das Verfahren zum Schritt 20 zurück und nachfolgend werden die Schritte 20, 21, 22 und 23 so oft wiederholt, bis keine Timing-Verletzungen mehr auftreten.

Wenn im Schritt 23 festgestellt wird, daß keine Timing-Verletzungen mehr vorliegen, fährt das Verfahren mit Schritt 24 fort. Im Schritt 24 wird ein sogenannter Layout-Merge oder Engineering Change Order (ECO) durchgeführt. In dem ECO 24 werden die Netzlisten gemäß der oder den gegenwärtigen Patchlisten modifiziert. Nach der Änderung der Netzliste für das Layout kehrt das Verfahren zum Schritt 17 zur Eingangs-Timing-Analyse des Schrittes 17 zurück. Der weitere Ablauf des Verfahrens erfolgt dann erneut wie oben beschrieben. Dies bedeutet, daß zumindest die Schritte 17, 18, ggf. auch die Schritte 20, 21, 22, 23, 24, wiederholt werden.

Somit können basierend auf einer existierenden Datenbasis, nämlich der SDF-Datei, Netzlisten äquivalente Modifikationen an den erforderlichen Stellen in die SDF-Datei eingebracht werden, um eine Vorab-Anlayse durchführen zu können, und zwar ohne dabei auf ein neues Layout zugreifen zu müssen. Die Netzliste für das Layout muß somit zunächst nicht geändert werden.

Wie bereits oben erwähnt, können Timing-Verletzungen generell in Hold- und Setup-Verletzungen unterteilt werden. Werden solche Verletzungen im Schritt 18 und 23 der Figur 2 festgestellt, können folgende physikalische Maßnahmen getroffen werden:
a) Hold-Verletzung: Austausch des Flip-Flops, z.B. Extended Hold-Flip-Flop (FF), Einfügen von Verzögerungselementen, ein Plazieren von Buffern vor den verletzten Inputs.
b) Setup-Verletzungen: Sogenannte Delayed Clock-Maßnahme: Der Takt am Ziel-FF wird verzögert und der TI-Eingang des FF wird verzögert.
   Sogenannte Early Clock-Maßnahme: Der Takt am Start-FF wird schneller gemacht (Einfügen des entsprechenden Verzögerungselements vor dem TI-Input des Nachfolge-FF in der SCAN-Kette muß noch in die Patchliste per Hand eingetragen werden).
   Upsizing von Gattern: Diese werden per Hand in die Patchlisten eingetragen und bei der nächsten Stufe (SDF-Patch bzw. SDF-Abändern) berücksichtigt.

Für diese physikalischen Maßnahmen werden im Rahmen der vorliegenden Erfindung äquivalente SDF-Dateimodifikationen gemäß der vorliegenden Tabelle vorgesehen und ggf. im Schritt 21 vorgesehen:

| **Physikalische Maßnahme** | **Äquivalenter Eingriff in SDF-Datei** |
|---|---|
| Hold-Verletzung: Einfügen von Verzögerungselement(en) | Hold/Setup von Ziel-FF pachen bzw.korrigieren |
| Setup-Verletzung: Verzögerter Takt, Delayelement am TI-Eingang | Interconnect von Ziel-FF/CP patchen, Hold/Setup von Ziel-FF/TI patchen |
| Setup-Verletzung: Früher Takt, Verzögerungselement am TI-Eingang des Nachfolger Flip-Flops (FF) | Interconnect von Ziel-FF/CP patchen, Hold/Setup von Nachfolger-FF/TI patchen |
| Einfügen bzw. Entfernen von Verzögerungselementen, Buffern, .. | IOPATH patchen |

Es ist weiterhin anzumerken, das gemäß dem Verfahren im bevorzugten Ausführungsbeispiel bei jedem Durchlaufen des Schrittes 20 eine neue Patchliste erzeugt wird, in der Verletzungsinformation gespeichert wird.

Gemäß anderer Ausführungsbeispiele wird jedoch nur eine Patchliste während des Timing-Closures verwaltet. Hierbei wird beim ersten Durchlaufen des Schrittes 20 eine Patchliste erzeugt und bei jedem weiteren Durchlauf des Schrittes c) wir d zusätzlich gewonnene Verletzungsinformation der bestehenden Patchliste angehängt.

Gemäß einem vorteilhaften Ausführungsbeispiel können die erforderlichen SDF-Dateimodifikationen auch automatisiert werden. Für die Durchführung des erfindungsgemäßen Verfahrens sind Scripte und Tools einsetzbar, die sowohl die Patchlisten als auch die Änderungen der SDF-Datei automatisch durchführen.

## Patentansprüche

1. Verfahren zum Entwickeln eines elektronischen Bausteins, wobei ein Layout für den Baustein durchgeführt (16) sowie eine Datei mit Timing-Informationen generiert wird, **gekennzeichnet durch** folgende Verfahrensschritte,
a) Durchführen (17) einer anfänglichen Timing-Analyse unter Verwendung der Datei um Verletzungen von Timing-Anforderungen zu ermitteln;
b) Produzieren (19) des Bausteins gemäß dem derzeitigen Layout, wenn keine Timing-Verletzung festgestellt wurde (18), ansonsten
c) Speichern (20) von Informationen über ermittelte Verletzungen von Timing-Anforderungen in mindestens einer Patchliste;
d) Ändern (21) der Datei gemäß der Verletzungsinformation in der Patchliste;
e) erneutes Durchführen (22) der Timing-Analyse unter Verwendung der abgeänderten Datei;
f) iteratives Wiederholen (23) der Schritte c), d) und e), wenn eine erneute Timing-Verletzung festgestellt wurde;
g) wenn keine Timing-Verletzung mehr festgestellt wird, Durchführen eines Layout-Anpassungsschrittes (24) und Generieren einer neuen Datei, die Laufzeitinformationen, basierend auf dem angepaßten Layout, enthält; und
h) Rückkehren zum Schrittes a) (17) und Ausführen des Schrittes.

2. Verfahren nach Anspruch 1, **dadurch gekennzeichnet, daß** aus den Verletzungsinformationen physikalische Maßnahmen abgeleitet werden, die im Layout implementiert werden müssen, um die Timing-Verletzungen zu vermeiden.

3. Verfahren nach Anspruch 1 oder 2, **dadurch gekennzeichnet, daß** im Schritt des Änderns der Datei gemäß Schritt d) (21) in dieser Datei Eingriffe vorgenommen werden, die äquivalent zu den durch die Verletzungsinformation in der Patchliste definierten physikalischen Maßnahmen und konform zu einem Dateiformat dieser Datei sind.

4. Verfahren nach einem der vorhergehenden Ansprüche, **dadurch gekennzeichnet, daß** die Datei eine Datei im Standard Delay Format (SDF) ist.

5. Verfahren nach einem der vorhergehenden Ansprüche, **dadurch gekennzeichnet, daß** der Schritt e) (22) eine statische Timing-Analyse (STA) ist.

6. Verfahren nach einem der vorhergehenden Ansprüche, **dadurch gekennzeichnet, daß** der Layoutanpassungsschritt g) (24) einen Engineering-Change-Order-(ECO)-Schritt umfaßt.

7. Verfahren nach einem der vorhergehenden Ansprüche, **dadurch gekennzeichnet, daß** bei jedem Durchlaufen des Schrittes c) (20) eine neue Patchliste erzeugt wird, in der Verletzungsinformationen gespeichert wird.

8. Verfahren nach einem der vorhergehenden Ansprüche, **dadurch gekennzeichnet, daß** zu Beginn des Verfahrens beim ersten Durchlaufen des Schrittes c) (20) eine neue Patchliste erzeugt wird und bei jedem erneuten Durchlauf des Schrittes c) (20) weitere gewonnene Verletzungsinformationen der bestehenden Patchliste angehängt werden.

9. Verfahren nach einem der vorhergehenden Ansprüche, **dadurch gekennzeichnet, daß** im Layoutanpassungsschritt (24) die Verletzungsinformationen aus der bzw. den Patchliste(n) eingesetzt werden, um Netzlisten für das Layout zu ändern.

10. Verfahren nach einem der vorhergehenden Ansprüche, **dadurch gekennzeichnet, daß** Scripte und Tools eingesetzt werden, die sowohl die Patchlisten-Generierung (20) als auch die Änderungen (21) der SDF-Datei automatisch durchführen.
